# EUROPÄISCHE PATENTSCHRIFT

(11) **EP 3 137 694 B1**
(45) Veröffentlichungstag und Bekanntmachung des Hinweises auf die Patenterteilung: **06.11.2019**
(21) Anmeldenummer: 15718227.0
(22) Anmeldetag: 24.04.2015
(51) Int. Cl.: E03F 5/14, B07B 1/46, E02B 5/08, B01D 29/05

(54) **ROSTSTAB FÜR EINEN RECHENROST EINES RECHENS SOWIE DAMIT AUSGERÜSTETER RECHEN**
GRID BAR FOR A BAR SCREEN OF A FILTER UNIT, AND FILTER UNIT EQUIPPED THEREWITH
BARREAU DE GRILLE D'UN SYSTÈME DE GRILLE DE RETENUE ET SYSTÈME DE GRILLE DE RETENUE AINSI ÉQUIPÉ

(30) Priorität: 30.04.2014 DE 102014106059
(43) Veröffentlichungstag der Anmeldung: 08.03.2017
(73) Patentinhaber: Huber SE, 92334 Berching (DE)
(72) Erfinder: RONG, Oliver, 92334 Berching (DE); STARCEVIC, Nikica, 92334 Berching (DE); ABT, Simon, 91177 Thalmässing (DE)
(74) Vertreter: Baudler, Ron
(86) Internationale Anmeldenummer: PCT/EP2015/058920
(87) Internationale Veröffentlichungsnummer: WO 2015/165816

(56) Entgegenhaltungen:
- EP-A1- 0 703 010
- EP-A2- 0 908 214
- DE-A1-102010 037 223
- DE-U- 1 992 838
- DE-U- 6 802 888
- US-A- 2 996 189

## Beschreibung

Die vorliegende Erfindung betrifft einen Roststab für einen, eine Vielzahl von nebeneinander angeordneten und voneinander beabstandeten Roststäben umfassenden, Rechenrost eines Rechens, der dem Abscheiden von Siebgut aus einer strömenden Flüssigkeit, wie beispielsweise aus einem in einem Abwasserkanal strömenden Abwasser, dient, wobei der Roststab zumindest teilweise aus einem mit Fasern verstärkten Kunststoff besteht, wobei zumindest ein Teil der Fasern in einer Längsrichtung des Roststabs verlaufen. Darüber hinaus wird ein Rechen zum Abscheiden und Entfernen von Siebgut aus einer strömenden Flüssigkeit, beispielsweise aus einem in einem Abwasserkanal strömenden Abwasser, beschrieben, wobei der Rechen einen Rechenrost mit einer Vielzahl von nebeneinander angeordneten und voneinander beabstandeten Roststäben aufweist.

Gattungsgemäße Roststäbe bzw. damit ausgerüstete Rechen sind im Stand der Technik bekannt und dienen beispielsweise der Entfernung von grobem Siebgut aus einem in einem Abwasserkanal fließenden Abwasser. Der die Roststäbe umfassende Rechenrost wird hierzu derart in den Abwasserkanal integriert, dass sich die durch die Roststäbe gebildete Siebfläche, ausgehend von einer Kanalsohle des Abwasserkanals, senkrecht oder leicht geneigt nach oben erstreckt. Zur Entfernung des durch den Rechenrost zurückgehaltenen Siebguts können schließlich ein oder mehrere Reinigungselemente vorhanden sein, die mit Hilfe eines Antriebs relativ zum Rechenrost bewegt werden können, um das Siebgut vom Rechenrost zu entfernen.

Entsprechende Roststäbe bzw. damit ausgerüstete Rechen sind beispielsweise in der US 2,996,189 A (Verwendung von Kunststoffmaterialien), der EP 0 908 214 A2 (Rechen für den Wasserzulauf von beispielsweise Kraftwerken), der DE 19 92 838 U (Siebboden aus Gummi) oder der EP 0 703 010 A1 (Metallsieb mit Gummiarmierung) beschrieben.

Um die notwendige Festigkeit bzw. Biegesteifigkeit der einzelnen Roststäbe sicherzustellen, sind die bekannten Roststäbe aus einem Metall, beispielsweise Edelstahl, gefertigt. Die Herstellung der Roststäbe ist daher entsprechend kostenintensiv.

Aufgabe der vorliegenden Erfindung ist es, einen Roststab für einen entsprechenden Rechen vorzuschlagen, der sich trotz verhältnismäßig geringer Herstellkosten durch eine besonders hohe Stabilität auszeichnet.

Die Aufgabe wird gelöst durch einen Roststab mit den Merkmalen von Anspruch 1.

Wie bereits oben erwähnt, besteht der Roststab zumindest teilweise aus einem mit Fasern verstärkten Kunststoff, wobei zumindest ein Teil der Fasern in einer Längsrichtung des Roststabs verlaufen. Der Roststab besitzt also eine längliche, vorzugsweise geradlinig verlaufende, Form und eine Vielzahl von Fasern, die sich in Längsrichtung, d. h. in der Richtung mit der größten räumlichen Ausdehnung des Roststabs, erstrecken. Bei den Fasern kann es sich beispielsweise um Glasfasern oder Kohlefasern oder auch eine Mischung derselben handeln (selbstverständlich sind auch andere Fasern, beispielsweise aus Metall, nicht ausgeschlossen, wobei der Begriff "Faser" lediglich aussagt, dass es sich um ein längliches und dünnes Gebilde handelt, das den Roststab, vorzugsweise über seine gesamte Länge, durchzieht).

Die Fasern sind von einem Kunststoff, vorzugsweise einem Kunststoffharz, umgeben bzw. in den Kunststoff eingebettet. Der Rechenrost erhält hierdurch eine ausreichend hohe Biegesteifigkeit und kann damit zusammen mit weiteren Roststäben in einem Rechenrost eines Rechens Verwendung finden. Bei dem Kunststoff kann es sich beispielsweise um ein Vinylesterharz oder Polyesterharz oder auch um Mischungen verschiedener Kunststoffe bzw. Kunststoffharze handeln.

Selbstverständlich können neben dem Kunststoff und den genannten Fasern weitere Bestandteile vorhanden sein. Denkbar sind beispielsweise auch Füllstoffe oder Additive, mit deren Hilfe die physikalischen Eigenschaften des Roststabs bzw. dessen Oberfläche positiv beeinflusst werden können.

Die Roststäbe werden schließlich vor dem Einbau in einen Rechen miteinander verbunden und bilden hierdurch eine Einheit, wobei zwischen den, vorzugsweise parallel verlaufenden, Roststäben eine Vielzahl von Schlitzen ausgebildet ist, durch die die zu siebende Flüssigkeit hindurchtreten kann, während Siebgut, das größer als die Schlitzbreite ist, von dem Rechenrost zurückgehalten wird.

Der die einzelnen Roststäbe umfassende Rechenrost kann beispielsweise als Bestandteil eines Abwasserrechens innerhalb eines Abwasserkanals positioniert werden, um grobes Siebgut (insbesondere Verunreinigungen) aus dem Abwasser zu entfernen. Denkbar ist es ebenso, den Rechenrost in künstlich geschaffene oder natürliche Wasserkanäle, beispielsweise Flüsse, zu integrieren, um z. B. Verunreinigungen vor Wehranlagen oder im Wassereinlassbereich von Kraftwerken aus dem Wasser zu entfernen.

In jedem Fall ist es vorteilhaft, wenn sich zumindest der Großteil der Fasern, vorzugsweise alle Fasern, durchgängig zwischen zwei, den Roststab in seiner Längsrichtung begrenzenden, Stirnseiten erstreckt. Insbesondere können der Roststab und damit auch die einzelnen Fasern eine Länge von über einem Meter aufweisen. Die Stirnseiten können zudem eine Schutzschicht aufweisen, so dass die Faserenden von außen nicht zugänglich und damit geschützt sind, wobei die genannte Schutzschicht vorzugsweise als Kunststoff(harz)schicht vorliegt und nur wenige Millimeter dick sein kann.

Besonders vorteilhaft ist es, wenn zumindest der Großteil der Fasern parallel zur Längsrichtung des Roststabs und/oder parallel zueinander verläuft. Die einzelnen Fasern sind hierbei zumindest abschnittsweise mit einem Kunststoffharz umgeben (wobei das in der Beschreibung bzw. den Ansprüchen an mehreren Stellen genannte Kunststoffharz selbstverständlich ausgehärtet ist). Die Fasern sind zudem vorzugsweise derart in das Kunststoffharz eingebettet, dass sie von außen nicht zugänglich und damit vor mechanischem Kontakt mit dem in der zu siebenden Flüssigkeit vorhandenen Siebgut geschützt sind.

Erfindungsgemäß zeichnet sich der Roststab dadurch aus, dass zumindest ein Teil der Fasern eine Feinheit aufweist, deren Betrag wenigstens 300 tex, bevorzugt wenigstens 500 tex, beträgt (wobei ein "tex" einer längenbezogenen Masse von einem Gramm pro 1000 Meter der jeweiligen Faser entspricht). Würde der Wert unter 300 tex liegen, wäre die Zugfestigkeit der einzelnen Fasern sehr gering, so dass eine übermäßig hohe Anzahl von Einzelfasern eingesetzt werden müsste. Schließlich ist es von Vorteil, wenn die Feinheit der jeweiligen Fasern in Längsrichtung des Roststabs konstant ist.

Es ist äußert vorteilhaft, wenn das Verhältnis zwischen der Masse der Fasern und der Gesamtmasse des Roststabs wenigstens 0,4, bevorzugt wenigstens 0,5, besonders bevorzugt wenigstens 0,6, beträgt. Der entsprechende Roststab weist ab einem Wert von 0,4 eine Festigkeit bzw. Biegesteifigkeit auf, die für die meisten Anwendungsfälle ausreichend hoch ist. Das Verhältnis ist vorzugsweise über die gesamte in Längsrichtung verlaufende Ausdehnung des Roststabs konstant, kann jedoch in einer senkrecht zur Längsrichtung verlaufenden Richtung schwanken, wobei es insbesondere im Bereich einer Vorderseite und/oder einer Rückseite des Roststabs von Vorteil sein kann, einen höheren Wert zu wählen als im restlichen Bereich des Roststabs.

Vorteile bringt es zudem mit sich, wenn der Roststab eine Vielzahl von einzelnen Faserbündeln umfasst, wobei die einzelnen Faserbündel jeweils eng aneinander liegende Fasern umfassen und in ein Kunststoffharz eingebettet sind. Die einzelnen Fasern eines Faserbündels können parallel zueinander oder ineinander verdreht verlaufen. Gleiches gilt für die einzelnen Faserbündel. Die Anzahl der Faserbündel pro Roststab sollte zwischen 10 und 200, vorzugsweise zwischen 40 und 100, betragen.

Besonders vorteilhaft ist es, wenn zumindest im Inneren des Roststabs zusätzliche Verstärkungselemente angeordnet sind, wobei die Fasern und die Verstärkungselemente in ein Kunststoffharz eingebettet sind. Bei den Verstärkungselementen kann es sich um wirr oder parallel zur Längsrichtung des Roststabs ausgerichtete Einzelfasern handeln, wobei die Verstärkungselemente zwischen den einzelnen Fasern bzw. den jeweiligen Faserbündeln angeordnet sein sollten. Ebenso können Verstärkungsfasern in Form von Geweben oder Vliesen zum Einsatz kommen. Das Massen- bzw. Volumenverhältnis von Fasern bzw. Faserbündeln zu Verstärkungselementen sollte zudem in Längsrichtung des Roststabs konstant sein oder maximal um 5 % schwanken.

Besondere Vorteile bringt es mit sich, wenn die Verstärkungselemente durch ein oder mehrere Schüttgüter gebildet sind. Insbesondere können die Verstärkungselemente aus einem Kunststoff, einem Metall oder auch Glas bestehen (wobei es beispielsweise auch denkbar wäre, innen hohle Glaskugeln einzusetzen). Der maximale Durchmesser des jeweiligen Schüttguts beträgt vorzugsweise zwischen 1 µm und 150 µm. Zudem kann das Schüttgut kugelförmig ausgebildet sein. Bevorzugt enthält der Roststab schließlich zwischen 0,01 kg und 10 kg der Verstärkungselemente pro 100 kg Kunststoffharz (bevorzugt wird ein Wert zwischen 0,1 und 5 kg der Verstärkungselemente pro 100 kg Kunststoffharz).

Auch ist es von Vorteil, wenn der Roststab zwei in seiner Längsrichtung verlaufende Seitenabschnitte, eine in Längsrichtung verlaufende Vorderseite und eine ebenfalls in Längsrichtung verlaufende Rückseite besitzt, wobei der Roststab zumindest im Bereich der Vorderseite (die nach Einbau in einen Rechen von einer Flüssigkeit und dem darin enthaltenen Siebgut angeströmt wird) und/oder im Bereich der Rückseite eine zusätzliche Verstärkung aufweist. Die Verstärkung kann beispielsweise durch einzelne, vorzugsweise in Längsrichtung des Roststabs verlaufende und innenliegende, Verstärkungsfasern gebildet sein, wobei die Verstärkungsfasern auch in Form von einzelnen Faserbündeln vorliegen können. Die Verstärkungsfasern können sich im Hinblick auf das Material oder die Feinheit von den oben genannten Fasern unterscheiden. Ebenso ist es denkbar, dass als Verstärkungsfasern zusätzliche Fasern zum Einsatz kommen, die sich hinsichtlich Feinheit bzw. Material nicht von den übrigen Fasern unterscheiden. Die Anzahl der Fasern pro Querschnittsfläche wäre in diesem Fall im Bereich der Vorderseite und/oder der Rückseite des Roststabs höher als in einem dazwischenliegenden Mittelbereich. In jedem Fall bewirken die entsprechenden Fasern/Verstärkungsfasern eine Verstärkung der entsprechenden Bereiche, so dass der mechanische Verschleiß beim Einsatz in einem Rechenrost möglichst gering gehalten werden kann.

Besondere Vorteile bringt es mit sich, wenn der Roststab zumindest abschnittsweise eine äußere Schutzschicht aufweist, die einen innenliegenden und die Fasern umfassenden Kern zumindest abschnittsweise umgibt. Die Schutzschicht kann z. B. im Bereich der oben genannten Vorderseite und/oder der sich daran anschließenden Seitenabschnitte angeordnet sein und erstreckt sich vorzugsweise über die gesamte Längsausdehnung des Roststabs. Ferner ist es denkbar, dass die Schutzschicht ein- oder auch mehrlagig ausgebildet ist. Insbesondere sollte die Schutzschicht eine höhere Härte bzw. Abriebfestigkeit aufweisen als das die Fasern des Roststabs umgebende Kunststoffharz.

Auch ist es von Vorteil, wenn die Schutzschicht wenigstens ein Vlies und/oder ein Gewebe umfasst, wobei die Schutzschicht vorzugsweise in ein Kunststoffharz eingebettet ist. Beispielsweise wäre es denkbar, ein Vlies bzw. Gewebe auf Glasfaserbasis einzusetzen. Das eingesetzte Gewebe bzw. Vlies besitzt vorzugsweise ein Flächengewicht von wenigstens 50 Gramm pro Quadratmeter, wobei das Flächengewicht in Längsrichtung des Roststabs vorzugsweise konstant ist.

Der erfindungsgemäße Rechen zeichnet sich schließlich dadurch aus, dass er einen Rechenrost umfasst, dessen Roststäbe zumindest teilweise aus einem mit Fasern verstärkten Kunststoff bestehen, wobei zumindest ein Teil der Fasern in Längsrichtung der Roststäbe verlaufen. Hinsichtlich möglicher Weiterbildungen der einzelnen Roststäbe wird auf die bisherige bzw. nachfolgende Beschreibung verwiesen, wobei die jeweiligen Merkmale jeweils einzeln oder in beliebiger Kombination verwirklicht sein können (sofern diesbezüglich kein Widerspruch vorliegt).

Insbesondere kann es sich bei dem Rechen um einen Abwasserrechen handeln, der beispielsweise in einen Abwasserkanal integriert werden kann, um im Abwasser mitgeführtes Siebgut aus dem Abwasser zu sieben. Denkbar ist auch die Verwendung des Rechens zur Reinigung von Flusswasser im Bereich eines Wassereinlasses eines Kraftwerks oder im Bereich von entsprechenden Stau- oder Sammelvorrichtungen natürlicher oder künstlicher Wasserkanäle.

In jedem Fall bringt es Vorteile mit sich, wenn der Rechen einen Antrieb und zumindest ein mit Hilfe des Antriebs relativ zum Rechenrost bewegbares Reinigungselement umfasst, mit dessen Hilfe vom Rechenrost zurückgehaltenes Siebgut vom Rechenrost entfernbar und in Richtung eines Austrags des Rechens förderbar ist. Bei dem Reinigungselement kann es sich beispielsweise um eine um den Rechenrost umlaufend bewegbare Reinigungsharke handeln, deren Reinigungszinken in die zwischen den Roststäben vorhandenen Zwischenräume eingreift und zurückgehaltenes Siebgut entlang des Rechenrosts bewegt, um diesen hierdurch von dem Siebgut zu befreien.

Weitere Vorteile der Erfindung sind in den nachfolgenden Ausführungsbeispielen beschrieben. Es zeigen, jeweils schematisch:
- **Figur 1**: eine Seitenansicht einer möglichen Ausführung eines erfindungsgemäßen Rechens,
- **Figur 2**: eine Perspektive eines Rechenrosts,
- **Figur 3**: eine Frontansicht eines erfindungsgemäßen Roststabs,

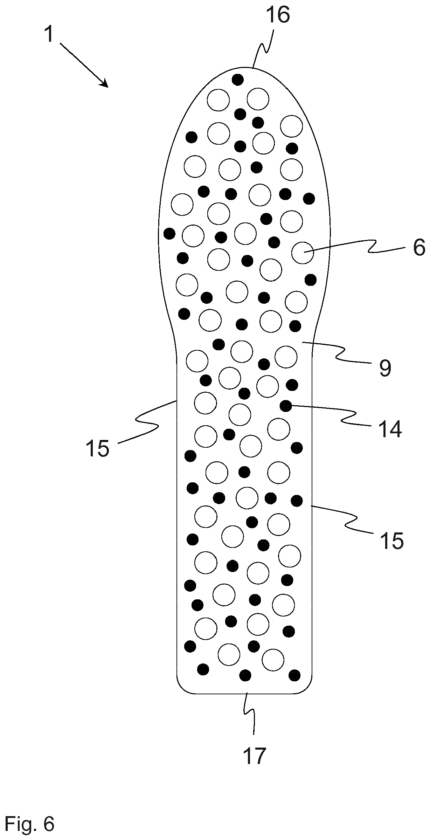

- **Figuren 4 bis 6**: Schnittdarstellungen verschiedener Ausführungen des erfindungsgemäßen Roststabs, geschnitten entlang einer senkrecht zur Längsrichtung verlaufenden Schnittebene, und
- **Figur 7**: eine Perspektive eines weiteren erfindungsgemäßen Roststabs.

Vorab sei erwähnt, dass in Figuren, die mehrere gleichartige (d. h. gleich gezeichnete) Bauteile zeigen, nur eines von mehreren gleichartigen Bauteilen mit Bezugszeichen versehen ist, um die notwendige Übersichtlichkeit zu gewährleisten.

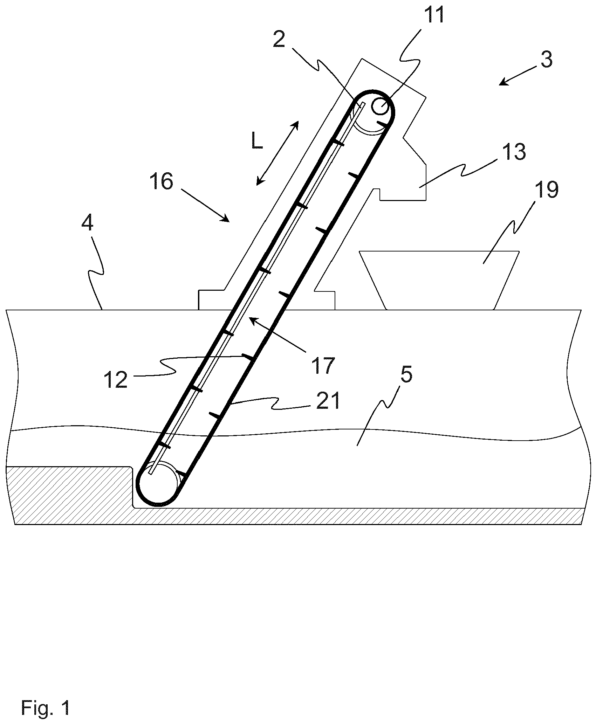

Figur 1 zeigt beispielhaft einen erfindungsgemäßen Rechen 3, der in einen Abwasserkanal 4 integriert ist und dem Abscheiden und Entfernen von Siebgut (z. B. in Form von Steinen, Ästen, etc.) aus einem in dem Abwasserkanal 4 strömenden Abwasser 5 dient.

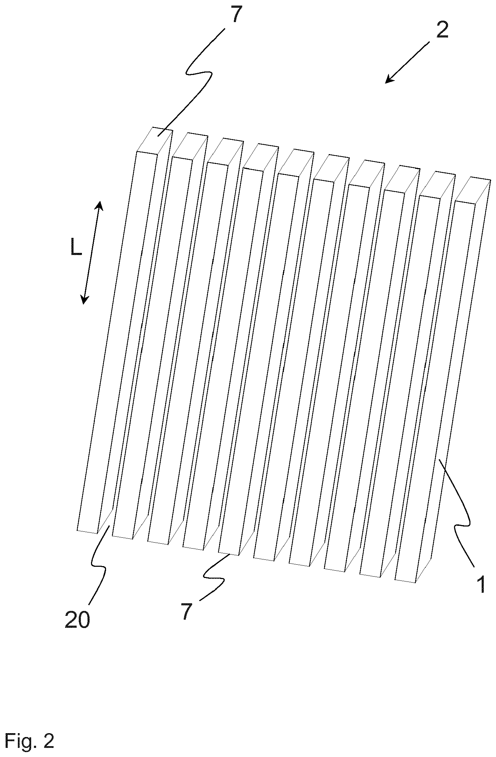

Der Rechen 3 weist einen in den Abwasserkanal 4 schräg von oben hineinragenden Rechenrost 2 auf, der durch nicht gezeigte Befestigungsmittel mit der Kanalwand des Abwasserkanals 4 oder einer Trägerstruktur des Rechens 3 verbunden ist. Der Rechenrost 2 umfasst wiederum, wie in Figur 2 gezeigt, eine Vielzahl von zueinander benachbarten Roststäben 1 (wobei die einzelnen Roststäbe 1 selbstverständlich auf nicht näher gezeigte Weise miteinander verbunden sind, um eine stabile Einheit zu bilden).

Zwischen den einzelnen Roststäben 1 entstehen schließlich Zwischenräume 20, so dass das Abwasser 5 sowie kleinere Verunreinigungen den Rechenrost 2 passieren können. Hingegen wird größeres Siebgut von den Roststäben 1 zurückgehalten, so dass der Rechen 3 im Ergebnis eine Reinigung des Abwassers 5 bewirkt.

Um das zurückgehaltene Siebgut vom Rechenrost 2 entfernen zu können, weist der Rechen 3 ein oder mehrere Reinigungselemente 12 auf, die mit Hilfe eines Antriebs 11 relativ zum Rechenrost 2 bewegbar sind. Beispielsweise können die Reinigungselemente 12 in Form von kammartig ausgebildeten Reinigungsharken vorliegen, deren einzelne Reinigungszinken in bzw. durch die genannten Zwischenräume 20 des Rechenrosts 2 (ein)greifen. Die Reinigungselemente 12 können z. B. über zwei parallel verlaufende, mit Hilfe eines Antriebs 11 umlaufend antreibbare, Umlaufketten 21 bewegt werden.

Das vom Rechenrost 2 zurückgehaltene Siebgut (die Abwasserströmung verläuft in Figur 1 von links nach rechts) wird schließlich von den Reinigungselementen 12 erfasst und nach oben gefördert. Dort gelangt es in den Bereich eines Austrags 13 und von dort nach außen, beispielsweise in einen entsprechenden Behälter 19.

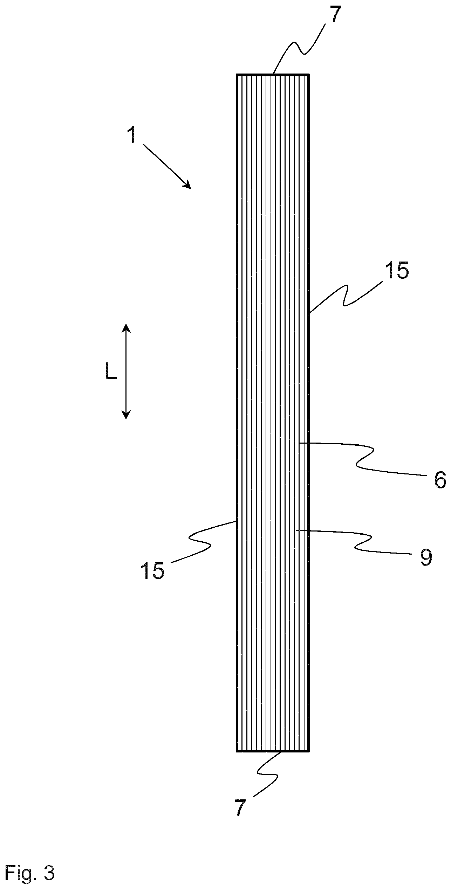

Figur 3 zeigt nun eine Frontansicht einer möglichen Ausführung eines erfindungsgemäßen Roststabs 1 des oben beschriebenen Rechenrosts 2. Wie dieser Figur zu entnehmen ist, umfasst der Roststab 1 eine Vielzahl von in Längsrichtung L desselben verlaufende Fasern 6, die in ein Kunststoffharz 9 eingebettet sind (hinsichtlich der jeweiligen Materialien wird auf die allgemeine Beschreibung verwiesen). Das Kunststoffharz 9 kann die gesamte Außenfläche des Roststabs 1 bedecken, so dass die Fasern 6, die der Stabilität des Roststabs 1 dienen, geschützt im Inneren des Roststabs 1 angeordnet sind.

Die einzelnen Fasern 6 verlaufen vorzugsweise parallel zueinander und erstrecken sich zwischen den beiden, den Roststab 1 in dessen Längsrichtung L begrenzenden, Stirnseiten 7.

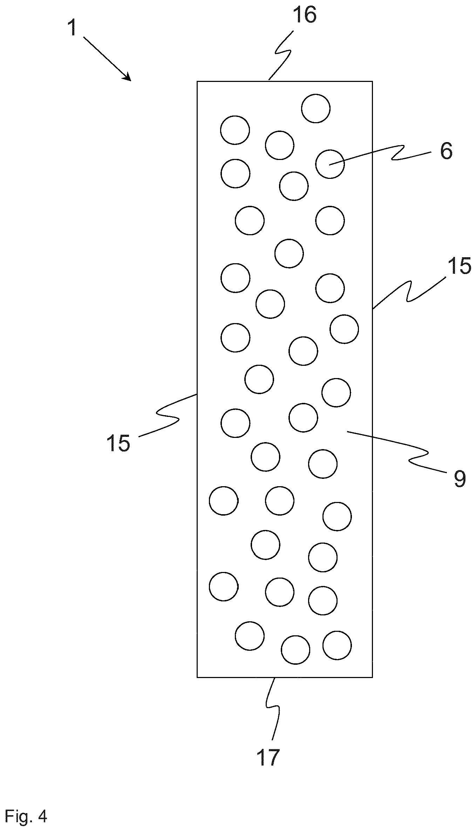

Figur 4 zeigt einen Querschnitt des erfindungsgemäßen Roststabs 1, geschnitten entlang einer senkrecht zur Längsrichtung L des entsprechenden Roststabs 1 verlaufenden Schnittebene. Der Roststab 1 besitzt in der gezeigten Ausführung einen rechteckigen Querschnitt. Zudem sind die Fasern 6 im Wesentlichen gleichmäßig über die Querschnittsfläche verteilt und jeweils vollständig in das Kunststoffharz 9 eingebettet.

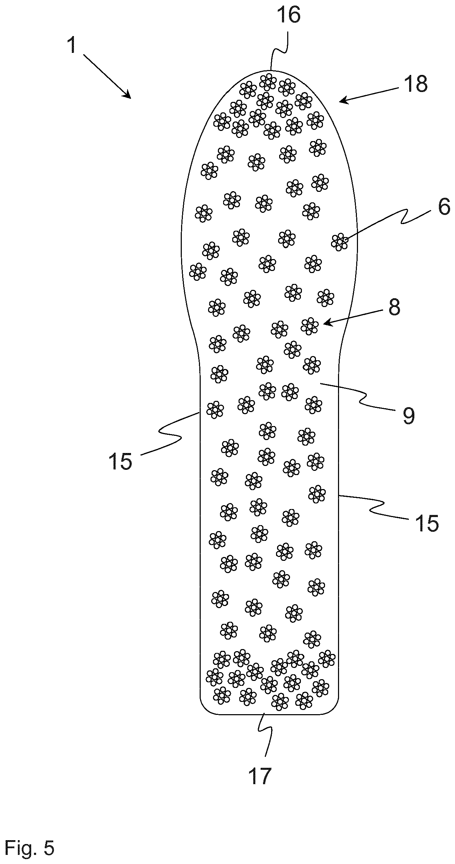

Ebenso wäre es möglich, die Fasern 6 in Form von einzelnen Faserbündeln 8 anzuordnen, wie dies in Figur 5 gezeigt ist. Die Fasern 6 der jeweiligen Faserbündel 8 können aneinander anliegen oder geringfügig voneinander beabstandet sein. Ebenso kann die Anzahl der Fasern 6 pro Faserbündel 8 variieren, wobei Faserbündel 8 mit jeweils gleicher Faseranzahl bevorzugt werden.

Ferner ist Figur 5 zu entnehmen, dass der Querschnitt des Roststabs 1 nicht zwangsläufig rechteckig sein muss. Vielmehr kann dieser auch oval oder abschnittsweise gekrümmt ausgebildet sein. Insbesondere ist es von Vorteil, wenn der Roststab 1 im Bereich seiner Vorderseite 16 eine Verdickung aufweist, so dass sich das zurückgehaltene Siebgut im Bereich der Vorderseite 16 sammelt (da hier die entsprechenden Zwischenräume 20 zwischen benachbarten Roststäben 1 am geringsten sind) und somit von vorne zugänglich bzw. mit Hilfe des oder der Reinigungselemente 12 abreinigbar ist. Zudem ermöglicht die in Figur 5 gezeigte Form der Vorderseite 16 ein strömungsoptimiertes Vorbeiströmen der entsprechenden Flüssigkeit, so dass die Abnutzung der Oberlfäche des Roststabs 1 minimiert werden kann.

Ebenso ist es denkbar, im Bereich der Vorderseite 16 und/oder der gezeigten Rückseite 17 die Faserdichte (d. h. die Anzahl der Fasern 6 pro Querschnittsfläche) gegenüber einem zwischen der Vorderseite 16 und der Rückseite 17 platzierten Mittelbereich des Roststabs 1 zu erhöhen. Dies führt schließlich zu einer Erhöhung der Festigkeit der genannten Bereiche, die im Betrieb des Rechens 3 durch das zurückgehaltene Siebgut bzw. die relativ zum Rechenrost 2 bewegten Reinigungselemente 12 einer besonders hohen mechanischen Belastung ausgesetzt sind. Die Faserdichte kann insbesondere durch die Anordnung zusätzlicher Verstärkungsfasern 18 in den genannten Bereichen erhöht werden, wobei die Art und Feinheit aller eingesetzten Fasern 6 identisch sein kann.

Alternativ oder zusätzlich kann es auch von Vorteil sein, zwischen den jeweiligen Fasern 6 bzw. den einzelnen Faserbündeln 8 einzelne Verstärkungselemente 14 anzuordnen, d. h. in das Kunststoffharz 9 einzubetten. Bei den Verstärkungselementen 14 kann es sich beispielsweise um ein Schüttgut (beispielsweise aus Glas) handeln, wobei die Konzentration des Schüttguts im Bereich der Vorderseite 16 und/oder der Rückseite 17 höher sein kann als im dazwischenliegenden Mittelbereich bzw. den beiden Seitenabschnitten 15 des Roststabs 1.

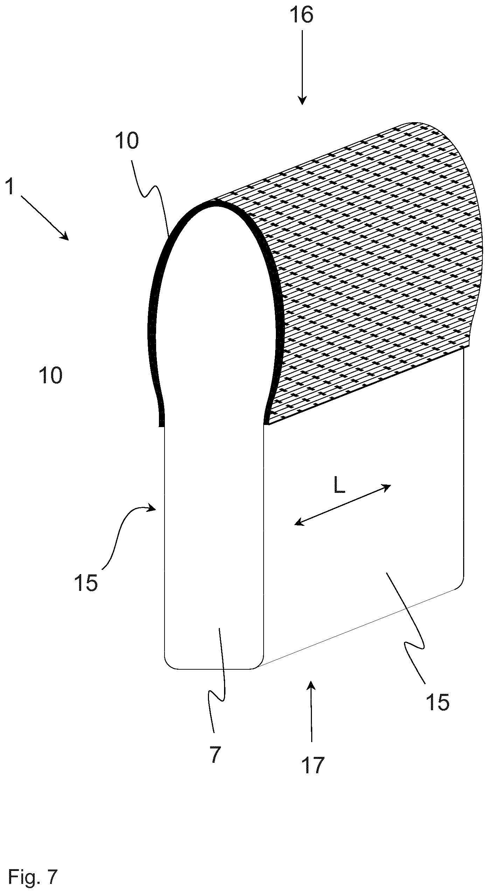

Schließlich zeigt Figur 7, dass es von Vorteil sein kann, wenn der Roststab 1 eine Schutzschicht 10 aufweist. Die Schutzschicht 10 kann beispielsweise ein- oder mehrlagig ausgebildet sein und umfasst vorzugsweise ein oder mehrere Gewebe- und/oder ein oder mehrere Vliesschichten. Das vorhandene Gewebe bzw. Vlies kann von außen aufgebracht sein oder in eine äußere Kunststoffharz 9 eingebettet sein (die in Figur 7 gezeigte Ausführung besitzt selbstverständlich ebenfalls entsprechende Fasern 6, die jedoch nicht explizit dargestellt sind).

Die vorliegende Erfindung ist nicht auf die dargestellten und beschriebenen Ausführungsbeispiele beschränkt. Abwandlungen im Rahmen der Patentansprüche sind ebenso möglich wie eine beliebige Kombination der beschriebenen Merkmale, auch wenn sie in unterschiedlichen Teilen der Beschreibung bzw. den Ansprüchen oder in unterschiedlichen Ausführungsbeispielen dargestellt und beschrieben sind.

### Bezugszeichenliste

- 1: Roststab
- 2: Rechenrost
- 3: Rechen
- 4: Abwasserkanal
- 5: Abwasser
- 6: Faser
- 7: Stirnseite
- 8: Faserbündel
- 9: Kunststoffharz
- 10: Schutzschicht
- 11: Antrieb
- 12: Reinigungselement
- 13: Austrag
- 14: Verstärkungselement
- 15: Seitenabschnitt
- 16: Vorderseite
- 17: Rückseite
- 18: Verstärkungsfaser
- 19: Behälter
- 20: Zwischenraum
- 21: Umlaufkette

- L: Längsrichtung

## Patentansprüche

1. Roststab für einen, eine Vielzahl von nebeneinander angeordneten und voneinander beabstandeten Roststäben (1) umfassenden, Rechenrost (2) eines Rechens (3), der dem Abscheiden von Siebgut aus einer strömenden Flüssigkeit, wie beispielsweise aus einem in einem Abwasserkanal (4) strömenden Abwasser (5), dient, wobei der Roststab (1) zumindest teilweise aus einem mit Fasern (6) verstärkten Kunststoff besteht, wobei zumindest ein Teil der Fasern (6) in einer Längsrichtung (L) des Roststabs (1) verlaufen, **dadurch gekennzeichnet, dass** zumindest ein Teil der Fasern (6) eine Feinheit aufweist, deren Betrag wenigstens 300 tex beträgt.

2. Roststab gemäß dem vorangegangenen Anspruch, **dadurch gekennzeichnet, dass** sich zumindest der Großteil der Fasern (6) durchgängig zwischen zwei, den Roststab (1) in seiner Längsrichtung (L) begrenzenden, Stirnseiten (7) des Roststabs (1) erstreckt.

3. Roststab gemäß Anspruch 1 oder 2, **dadurch gekennzeichnet, dass** zumindest der Großteil der Fasern (6) parallel zur Längsrichtung (L) des Roststabs (1) und/oder parallel zueinander verläuft.

4. Roststab gemäß einem der vorangegangenen Ansprüche, **dadurch gekennzeichnet, dass** zumindest ein Teil der Fasern (6) eine Feinheit aufweist, deren Betrag wenigstens 500 tex beträgt.

5. Roststab gemäß einem der vorangegangenen Ansprüche, dadurch gekennzei chnet, dass das Verhältnis zwischen der Masse der Fasern (6) und der Gesamtmasse des Roststabs (1) wenigstens 0,4, bevorzugt wenigstens 0,5, besonders bevorzugt wenigstens 0,6, beträgt.

6. Roststab gemäß einem der vorangegangenen Ansprüche, **dadurch gekennzeichnet, dass** der Roststab (1) eine Vielzahl von einzelnen Faserbündeln (8) umfasst, wobei die einzelnen Faserbündel (8) jeweils eng aneinander liegende Fasern (6) umfassen und wobei die Faserbündel (8) in ein Kunststoffharz (9) eingebettet sind.

7. Roststab gemäß einem der vorangegangenen Ansprüche, **dadurch gekennzeichnet, dass** zumindest im Inneren des Roststabs (1) zusätzliche Verstärkungselemente (14) angeordnet sind, wobei die Fasern (6) und die Verstärkungselemente (14) in ein Kunststoffharz (9) eingebettet sind.

8. Roststab gemäß dem vorangegangenen Anspruch, **dadurch gekennzeichnet, dass** die Verstärkungselemente (14) durch ein Schüttgut gebildet sind.

9. Roststab gemäß einem der vorangegangenen Ansprüche, **dadurch gekennzeichnet, dass** der Roststab (1) zwei in seiner Längsrichtung (L) verlaufende Seitenabschnitte (15), eine in Längsrichtung (L) verlaufende Vorderseite (16) und eine ebenfalls in Längsrichtung (L) verlaufende Rückseite (17) besitzt, wobei der Roststab (1) zumindest im Bereich der Vorderseite (16) und/oder im Bereich der Rückseite (17) eine zusätzliche Verstärkung aufweist, wobei die Verstärkung durch einzelne, vorzugsweise in Längsrichtung (L) des Roststabs (1) verlaufende und innenliegende, Verstärkungsfasern (18) gebildet ist.

10. Roststab gemäß einem der vorangegangenen Ansprüche, **dadurch gekennzeichnet, dass** der Roststab (1) zumindest abschnittsweise eine äußere Schutzschicht (10) aufweist, die einen innenliegenden und die Fasern (6) umfassenden Kern zumindest abschnittsweise umgibt.

11. Roststab gemäß dem vorangegangenen Anspruch, **dadurch gekennzeichnet, dass** die Schutzschicht (10) wenigstens ein Vlies und/oder ein Gewebe umfasst, wobei die Schutzschicht (10) vorzugsweise in ein Kunststoffharz (9) eingebettet ist.

12. Rechen (3) zum Abscheiden und Entfernen von Siebgut aus einer strömenden Flüssigkeit, beispielsweise aus einem in einem Abwasserkanal (4) strömenden Abwasser (5), wobei der Rechen (3) einen Rechenrost (2) mit einer Vielzahl von nebeneinander angeordneten und voneinander beabstandeten Roststäben (1) aufweist,
**dadurch gekennzeichnet,**
**dass** zumindest ein Teil der Roststäbe (1) gemäß einem der vorangegangenen Ansprüche ausgebildet ist.

13. Rechen gemäß dem vorangegangenen Anspruch, **dadurch gekennzeichnet, dass** der Rechen (3) einen Antrieb (11) und zumindest ein mit Hilfe des Antriebs (11) relativ zum Rechenrost (2) bewegbares Reinigungselement (12), beispielsweise eine Reinigungsharke, umfasst, mit dessen Hilfe vom Rechenrost (2) zurückgehaltenes Siebgut vom Rechenrost (2) entfernbar und in Richtung eines Austrags (13) des Rechens (3) förderbar ist.

## Claims

1. Grid bar for a screen grid (2) of a screen (3) comprising a multiple number of grid bars (1) arranged next to each other and spaced apart from each other, which serves the purpose of separating screening material from a flowing liquid, such as wastewater (5) flowing in a sewer channel (4),
wherein the grid bar (1) consists, at least partially, of a plastic reinforced with fibers (6), whereas at least a part of the fibers (6) extend in a longitudinal direction (L) of the grid bar (1),
**characterized in that**
at least a part of the fibers (6) has a fineness of at least 300 tex.

2. Grid bar according to the preceding claim, **characterized in that** at least the majority of the fibers (6) extend continuously between two end faces (7) of the grid bar (1) bounding the grid bar (1) in its longitudinal direction (L).

3. Grid bar according to claim 1 or 2, **characterized in that** at least the majority of the fibers (6) runs parallel to the longitudinal direction (L) of the grid bar (1) and/or parallel to each other.

4. Grid bar according to one of the preceding claims, **characterized in that** at least a part of the fibers (6) has a fineness of at least 500 tex.

5. Grid bar according to one of the preceding claims, **characterized in that** the ratio between the mass of the fibers (6) and the total mass of the grid bar (1) is at least 0.4, preferably at least 0.5, more preferably at least 0.6.

6. Grid bar according to one of the preceding claims, **characterized in that** the grid bar (1) comprises a multiple number of individual fiber bundles (8), whereas each of the individual fiber bundles (8) comprises fibers (6) located close to each other and whereas the fiber bundles (8) are embedded in a plastic resin (9).

7. Grid bar according to one of the preceding claims, **characterized in that** additional reinforcing elements (14) are arranged at least in the interior of the grid bar (1), whereas the fibers (6) and the reinforcing elements (14) are embedded in a plastic resin (9).

8. Grid bar according to the preceding claim, **characterized in that** the reinforcing elements (14) are formed by a bulk material.

9. Grid bar according to one of the preceding claims, **characterized in that** the grid bar (1) has two side sections (15) running in its longitudinal direction (L), one front side (16) running in the longitudinal direction (L) and one back side (17) also running in the longitudinal direction (L), whereas the grid bar (1) features an additional reinforcement at least in the area of the front side (16) and/or in the area of the back side (17), whereas the reinforcement is formed by individual reinforcing fibers (18) that preferably run in the longitudinal direction (L) of the grid bar (1) and are internal.

10. Grid bar according to one of the preceding claims, **characterized in that** the grid bar (1) features, at least in sections, an outer protective layer (10), which surrounds, at least in sections, an inner core comprising the fibers (6).

11. Grid bar according to the preceding claim, **characterized in that** the protective layer (10) comprises at least a non-woven material and/or a fabric, whereas the protective layer (10) is preferably embedded in a plastic resin (9).

12. Screen (3) for separating and removing screening material from a flowing liquid, such as that from wastewater (5) flowing in a sewer channel (4), whereas the screen (3) features a screen grid (2) with a multiple number of grid bars (1) arranged next to each other and spaced apart from each other.
**characterized in that**
at least a part of the grid bars (1) is formed in accordance with the preceding claims.

13. Screen according to the preceding claim, **characterized in that** the screen (3) comprises a drive (11) and at least one cleaning element (12), such as a cleaning rake, that is movable relative to the screen grid (2) with the assistance of the drive (11), with the assistance of which screening material retained by the screen grid (2) can be removed from the screen grid (2) and can be conveyed in the direction of a discharge (13) of the screen (3).

## Revendications

1. Barreau de grille pour une grille de retenue (2) d'un dégrilleur (3), comprenant une multitude de barreaux (1) de grille disposés les uns à côté des autres et distants les uns des autres, lequel sert à séparer des déchets de dégrillage depuis un liquide en écoulement, par exemple depuis une eau résiduaire (5) circulant dans une canalisation (4) d'eau résiduaire, sachant que le barreau (1) de grille est constitué au moins partiellement d'une matière plastique renforcée par des fibres (6), sachant qu'au moins une partie des fibres (6) s'étendent dans une direction longitudinale (L) du barreau (1) de grille, caractérisé en ce qu'au moins une partie des fibres (6) présentent une finesse dont la valeur est au moins 300 tex.

2. Barreau de grille selon la revendication précédente, caractérisé en ce qu'au moins la majeure partie des fibres (6) s'étendent en continu entre deux faces frontales (7) du barreau (1) de grille délimitant le barreau (1) de grille dans sa direction longitudinale (L).

3. Barreau de grille selon la revendication 1 ou 2, **caractérisé en ce qu'**au moins la majeure partie des fibres (6) s'étendent parallèlement à la direction longitudinale (L) du barreau (1) de grille et/ou parallèlement les unes aux autres.

4. Barreau de grille selon l'une des revendications précédentes, **caractérisé en ce qu'**au moins une partie des fibres (6) présentent une finesse dont la valeur est au moins 500 tex.

5. Barreau de grille selon l'une des revendications précédentes, **caractérisé en ce que** le rapport entre la masse des fibres (6) et la masse totale du barreau (1) de grille est d'au moins 0,4, de préférence d'au moins 0,5, de manière particulièrement préférée d'au moins 0,6.

6. Barreau de grille selon l'une des revendications précédentes, **caractérisé en ce que** le barreau (1) de grille comprend une multitude de faisceaux de fibres (8) individuels, sachant que les faisceaux de fibres (8) individuels comprennent respectivement des fibres (6) étroitement adjacentes les unes les autres et sachant que les faisceaux de fibres (8) sont noyés dans une résine synthétique (9).

7. Barreau de grille selon l'une des revendications précédentes, **caractérisé en ce que** des éléments de renforcement (14) supplémentaires sont disposés au moins à l'intérieur du barreau (1) de grille, sachant que les fibres (6) et les éléments de renforcement (14) sont noyés dans une résine synthétique (9).

8. Barreau de grille selon la revendication précédente, **caractérisé en ce que** les éléments de renforcement (14) sont formés par une matière en vrac.

9. Barreau de grille selon l'une des revendications précédentes, **caractérisé en ce que** le barreau (1) de grille présente deux sections latérales (15) s'étendant dans sa direction longitudinale (L), une face avant (16) s'étendant dans la direction longitudinale (L) et une face arrière (17) s'étendant également dans la direction longitudinale (L), sachant que le barreau (1) de grille présente un renfort supplémentaire au moins dans la zone de la face avant (16) et/ou dans la zone de la face arrière (17), sachant que le renfort est formé par des fibres de renforcement (18) individuelles s'étendant de préférence dans la direction longitudinale (L) du barreau (1) de grille et disposées à l'intérieur.

10. Barreau de grille selon l'une des revendications précédentes, **caractérisé en ce que** le barreau (1) de grille présente au moins en certains de ses segments une couche de protection extérieure (10) qui entoure au moins en certains segments un noyau intérieur comprenant les fibres (6).

11. Barreau de grille selon la revendication précédente, **caractérisé en ce que** la couche de protection (10) comprend au moins un non-tissé et/ou un tissu, sachant que la couche de protection (10) est de préférence noyée dans une résine synthétique (9).

12. Dégrilleur (3) pour séparer et éliminer des déchets de dégrillage d'un liquide en écoulement, par exemple depuis une eau résiduaire (5) circulant dans une canalisation (4) d'eau résiduaire, sachant que le dégrilleur (3) comporte une grille de retenue (2) avec une multitude de barreaux (1) de grille disposés les uns à côté des autres et distants les uns des autres,
**caractérisé en ce qu'**au moins une partie des barreaux (1) de grille se présentent sous une forme selon l'une des revendications précédentes.

13. Dégrilleur selon la revendication précédente, **caractérisé en ce que** le dégrilleur (3) comporte un entraînement (11) et au moins un élément de nettoyage (12), par exemple un râteau de nettoyage, déplaçable par rapport à la grille de retenue (2) au moyen de l'entraînement (11), au moyen duquel les déchets de dégrillage retenus par la grille de retenue (2) peuvent être éliminés de la grille de retenue (2) et transportés dans la direction d'une décharge (13) du dégrilleur (3).
